# EUROPÄISCHE PATENTSCHRIFT

(11) **EP 0 562 181 B1**
(45) Veröffentlichungstag und Bekanntmachung des Hinweises auf die Patenterteilung: **27.03.1996**
(21) Anmeldenummer: 92121969.7
(22) Anmeldetag: 24.12.1992
(51) Int. Cl.: B29C 45/67

(54) **Formschliessvorrichtung für eine Spritzgiessmaschine**
Clamping device for an injection moulding machine
Unité de fermeture pour un dispositif de moulage par injection

(30) Priorität: 23.03.1992 DE 4209392
(43) Veröffentlichungstag der Anmeldung: 29.09.1993
(73) Patentinhaber: Krauss-Maffei Aktiengesellschaft, D-80997 München (DE)
(72) Erfinder: Wohlrab, Walter, W-8832 Weissenburg (DE)

(56) Entgegenhaltungen:
- DE-A- 2 414 668
- DE-A- 2 631 603

## Beschreibung

Die Erfindung betrifft eine Formschließvorrichtung für eine Spritzgießmaschine gemäß Oberbegriff des Anspruchs 1 sowie ein Verfahren zum Betrieb einer solchen Formschließvorrichtung.

Bekannte Formschließvorrichtungen (EP 0 296 410 A1, Fig. 10) entsprechen nach der Verriegelung der die feste Formaufspannplatte durchsetzenden Kolbenstangen in der beweglichen Formaufspannplatte der im Oberbegriff der im Anspruch 1 definierten Art, wobei die hydraulische Eilgang-Kolben-Zylindereinheit außerhalb an der festen und beweglichen Formaufspannplatte angeordnet ist, wodurch die Zugänglichkeit zu den geöffneten Werkzeughälften beeinträchtigt ist. Im weiteren muß das hydraulische System zur Erzeugung eines erhöhten Schließdrucks auch außerhalb der Formschließeinheit angeordnet sein.

Der Erfindung liegt die Aufgabe zugrunde, eine Formschließeinrichtung der eingangs genannten Gattung so weiterzuentwickeln, daß sich bei Anordnung einer Eilgangvorrichtung und einer Druckübersetzervorrichtung zur Schaffung eines erhöhten Schließdruckes eine kompakte, und leicht zugängliche Formschließeinheit ergibt.

Diese Aufgabe wird erfindungsgemäß durch die kennzeichnenden Merkmale des Anspruchs 1 gelöst.

Erfindungsgemäß ist sowohl die Eilgangvorrichtung als auch die Druckübersetzervorrichtung in den Kolbenstangen der Verriegelungskolben integriert, wodurch die Formschließvorrichtung bei Erfüllung vielfältiger Funktionen, eine einfache, kurze und kompakte Bauweise zeigt.

Darüberhinaus bietet die erfindungsgemäße Formschließvorrichtung den Vorteil, daß das hydraulische System ohne Nachsaugtank und ohne groß dimensionierte Nachsaugventile betrieben werden kann, da beim Schließen und Öffnen der Formwerkzeughälften lediglich ein Umpumpen zwischen den öffnungsseitigen und den schließseitigen Zylinderräumen der Verriegelungs- und Eilgangzylinder erfolgt, wobei ein wesentlicher Aspekt der Erfindung darin besteht, daß das Umwälzen der Ölmengen innerhalb des Systems auf einem höherem Druck-Grundniveau erfolgt, wie es im wesentlichen durch den Gegendruck (z.B. 6 bar) des ersten Rückschlagventils bestimmt wird. Im Vergleich zu den bekannten Vorrichtungen, bei denen die Nachsaugventile aus einem zur Atmosphäre offenen Tank ansaugen und somit zwecks Vermeidung von Kavitation (bzw. Abreißen der angesaugten Ölsäule) nur bis zu einem Saugdruck von ca. 0,5 bar betrieben werden können, bietet das erfindungsgemäße System die Möglichkeit, den Umwälzvorgang beim Öffnen und Schließen der Formschließvorrichtung mit wesentlichen höheren Druckdifferenzen und damit mit höherer Strömungsgeschwindigkeit schneller ablaufen zu lassen. Letztlich lassen sich dadurch die Taktzeiten der Spritzgießmaschine verkürzen.

Aufgrund der in den Unteransprüchen 3 und 4 angegebenen Flächenverhältnisse der Kolbenflächen des Systems, ist sichergestellt, daß beim Öffnen der Formschließvorrichtung stets eine bestimmte Menge neues Öl von der Pumpe P vom Tank in das System gepumpt wird, wodurch mit jedem Takt im Tank abgekühltes (und entgastes) Öl in das System eingespeist wird.

Weitere Vorteilhafte Ausgestaltungen und Maßnahmen der Erfindung sind in den übrigen Unteransprüchen angegeben.

Eine Ausführungsform der Erfindung wird anhand der Zeichnung näher erläutert. Es zeigt:
- Fig. 1: einen schematischen Längsschnitt durch eine Formschließvorrichtung einer Spritzgießmaschine gemäß der Schnittlinie I-I in Fig. 4, wobei sich das hydraulische System in der Schaltstellung "Schließen im Eilgang" befindet,
- Fig. 2: die Formschließvorrichtung entsprechend Fig. 1, jedoch in der Schaltstellung "Schließdruckaufbau",
- Fig. 3: die Formschließvorrichtung entsprechend Fig. 1 und Fig. 2, jedoch in der Schaltstellung "Öffnen",
- Fig. 4: die Formschließvorrichtung nach den Figuren 1 bis 3 in verkleinertem Maßstab, gemäß der Schnittlinie IV-IV in Fig. 1,
- Fig. 5: in vergrößertem Maßstab einen Detailausschnitt aus Fig. 1 mit einem Druckübersetzerkolben in der Betriebsstellung "Schließen im Eilgang",
- Fig. 6: den Druckübersetzerkolben nach Fig. 5 in der Betriebsstellung "Schließdruckaufbau",
- Fig. 7: einen dem Druckübersetzerkolben nach Fig. 5 im Prinzip entsprechenden Druckübersetzerkolben in der Bertriebsstellung "Schließen im Eilgang", jedoch ohne Druckfeder zwischen Druckübersetzerkolben und Ventilkörper und,
- Fig. 8: den Druckübersetzerkolben nach Fig. 7 in der Betriebsstellung "Schließdruckaufbau".

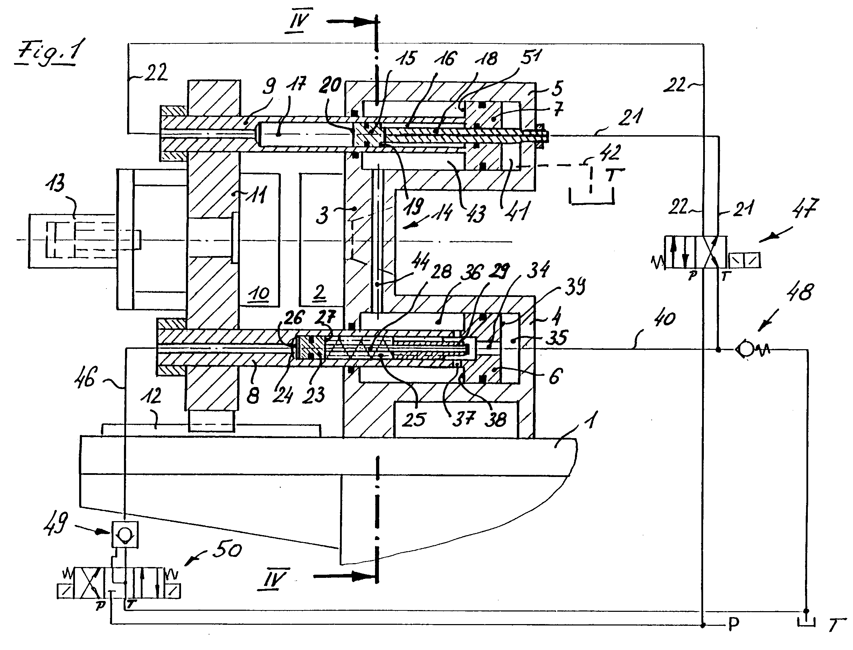

Die Fig. 1 zeigt eine Formschließvorrichtung für eine Spritzgießmaschine mit einem Grundgestell 1, auf dem eine feste, eine erste Formwerkzeughälfte 2 tragende Formaufspannplatte 3 befestigt ist, die vier Verriegelungszylinder 4, 5 aufweist, in denen Verriegelungskolben 6, 7 geführt sind, deren Kolbenstangen 8, 9 die feste Formaufspannplatte 3 durchsetzen und in einer beweglichen, die andere Formwerkzeughälfte 10 tragenden Formaufspannplatte 11 befestigt sind. Die Befestigung der Kolbenstangen 8, 9 in der beweglichen Formaufspannplatte 11 kann auch lösbar ausgeführt sein (entsprechend der Ausführungsform nach EP - 0 296 410, Fig. 10). Die bewegliche Formaufspannplatte 11 ist am Grundgestell 1 auf Gleitschienen 12 abgestützt. Auf den, den Formwerkzeughälften 2, 10 abgewandten Seiten weisen die bewegliche Formaufspannplatte 11 einen hydraulischen Auswerfer 13 und die feste Formaufspannplatte 3 eine Öffnung 14 für eine Spritzeinheit (nicht dargestellt) auf.

Die Verriegelungskolben bestehen aus zwei Arten, von denen die Verriegelungskolben 7 mit den zugehörigen Verriegelungszylindern 5 eine Eilgangsvorrichtung und die Verriegelungskolben 6 mit den zugehörigen Verriegelungszylindern 4 eine Druckübersetzervorrichtung enthalten.

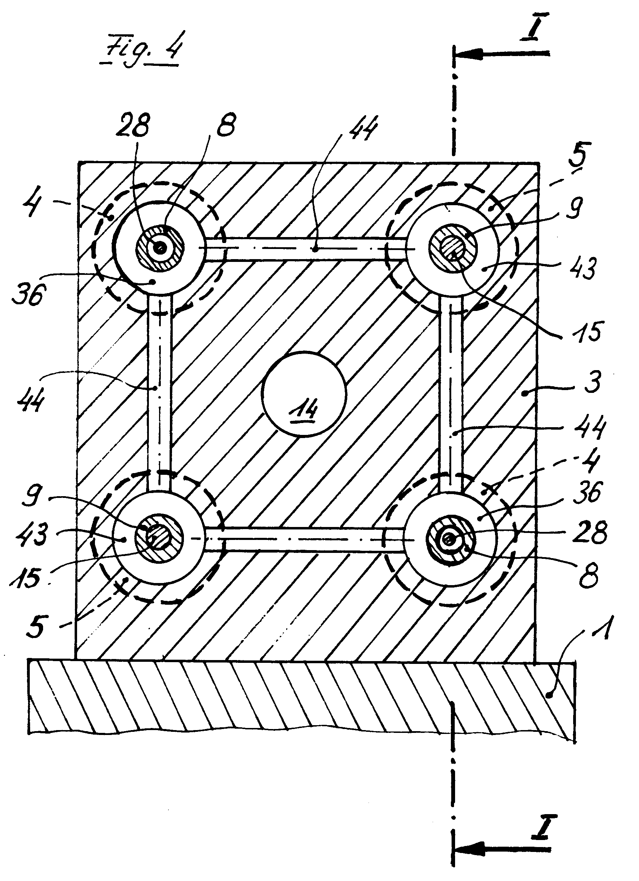

Wie aus Fig. 4 zu ersehen, sind jeweils zwei Verriegelungskolben 7 bzw. Verriegelungszylinder 5 und zwei Verriegelugskolben 6 bzw. Verriegelungszylinder 4 einander diagonal gegenüberliegend angeordnet, wodurch eine momentenfreie Kraftübertragung gewährleistet ist.

Der konstruktive Aufbau und die Funktion der Formschließeinheit wird im folgenden nur an Hand der beiden dargestellten Arten von Verriegelungskolben und Verriegelungszylinder beschrieben.

Die Kolbenstange 9 des Verrieglungskolbens 7 weist einen Eilgangzylinder auf, in dem ein Eilgangkolben 15 angeordnet ist, der den Eilgangzylinder in einen ringförmigen, schließseitigen Eilgang-Zylinderraum 16 und in einen öffnungsseitigen Eilgang-Zylinderraum 17 unterteilt. Die Kolbenstange 18 des Eilgangkolbens 15 durchsetzt den Verriegelungskolben 7 und ist im Verriegelungszylinder 5 befestigt. Der Eilgangkolben 15 weist eine schließseitige, ringförmige Kolbenfläche 19 und eine öffnungsseitige Kolbenfläche 20 auf. Durch die Kolbenstange 18 führt von außen eine Leitung 21 in den schließseitigen Eilgang-Zylinderraum 16. Der öffnungsseitige Eilgang-Zylinderraum 17 ist an eine Leitung 22 angeschlossen.

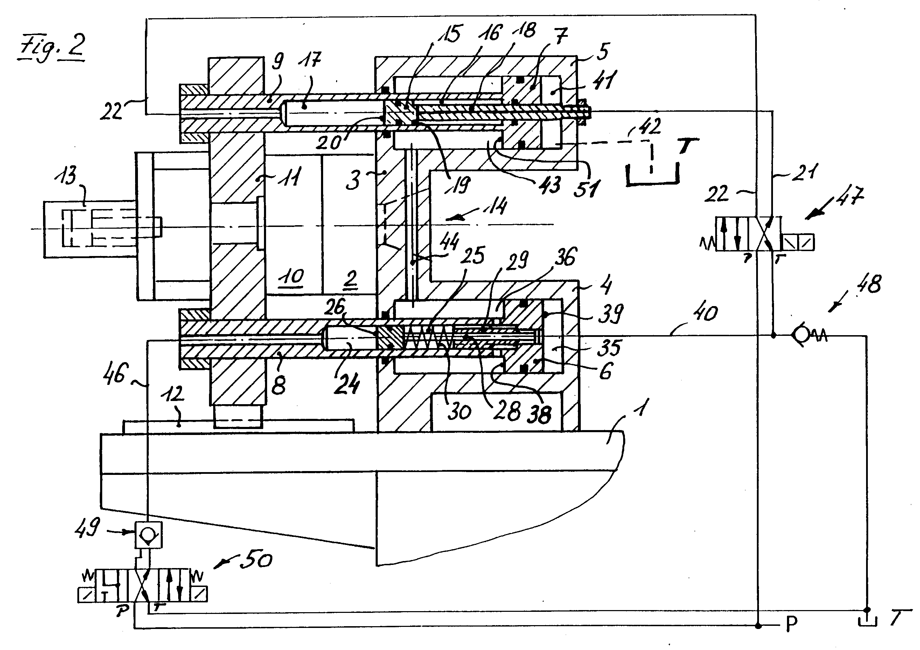

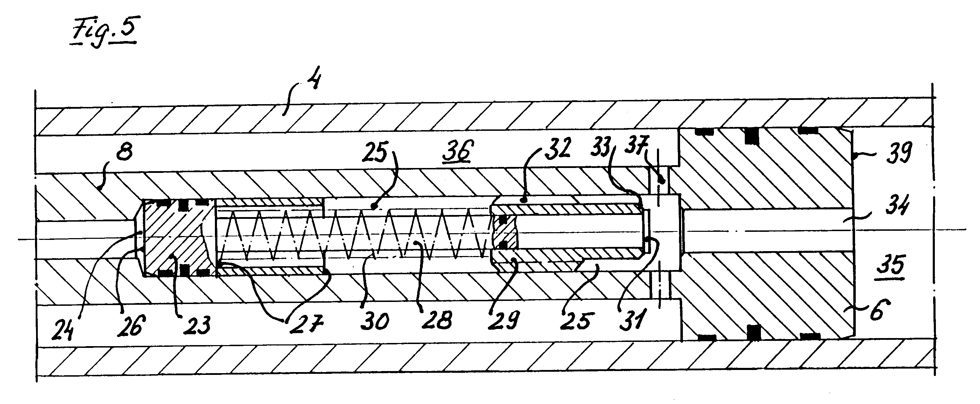

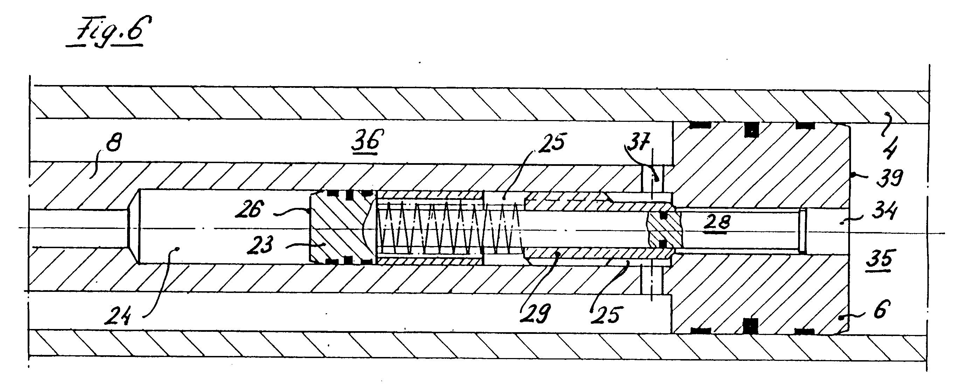

Die Kolbenstange 8 des Verriegelungskolbens 6 weist einen Druckübersetzerzylinder auf, in dem ein Druckübersetzerkolben 23 angeordnet ist, der den Druckübersetzerzylinder in einen Systemdruck-Zylinderraum 24 und in einen Überdruck-Zylinderraum 25 unterteilt. Der Druckübersetzerkolben 23 weist einen dem Systemdruck-Zylinderraum 24 zugeordnete Systemdruck-Kolbenfläche 26 und eine dem Überdruck-Zylinderraum 25 zugeordnete, ringförmige Überdruck-Kolbenfläche 27 auf, an der, wie aus den Fig. 5 und 6 im genaueren zu ersehen, eine Führungsstange 28 angeordnet ist, an der ein Ventilkörper 29 längsverschieblich gelagert ist. Zwischen der Überdruck-Kolbenfläche 27 und dem Ventilkörper 29 befindet sich eine Druckfeder 30, die den Ventilkörper 29 in der in den Fig. 1 und 5 dargestellten Betriebsstellung gegen einen Anschlag 31 der Führungsstange 28 drückt. Der Ventilkörper 29 weist eine Durchgangsnut 32 und eine Dichtungsfläche 33 auf, mit der, wie in den Fig. 2 und 6 dargestellt, eine im Verriegelungskolben 6 befindliche Durchgangsöffnung 34 verschließbar ist.

Der Verriegelungskolben 6 unterteilt den Verriegelungszylinder 4 in einen öffnungsseitigen Zylinderraum 35 und in einen schließseitigen Zylinderraum 36, der mit dem Überdruck-Zylinderraum 25 über in der Kolbenstange 8 ausgebildete Öffnungen 37 verbunden ist. Der Verriegelungskolben 6 weist eine schließseitige, ringförmige Kolbenfläche 38 und eine öffnungsseitige Kolbenfläche 39 auf. Vom öffnungsseitigen Zylinderraum zweigt eine Leitung 40 ab.

Der Verriegelungskolben 7 unterteilt den Verriegelungszylinder 5 in einen öffnungsseitigen Zylinderraum 41, der drucklos geschaltet ist und lediglich eine Leitung 42 zur Abführung von Lecköl zum Tank T aufweist, und in einen schließseitigen Zylinderraum 43, der mit dem schließseitigen Zylinderraum 36 über einen Kanal 44 in Verbindung steht.

Vom öffnungsseitigen Eilgang-Zylinderraum 17 zweigt eine Leitung 22 und vom Systemdruck-Zylinderraum 24 zweigt eine Leitung 46 ab. Die Leitungen 22 und 21 sind über ein erstes Mehrwegeventil 47 (4/2-Wegeventil) wechselweise mit einer Druckmittelquelle P (Pumpe) oder über die Leitung 40 mit dem öffnungsseitigen Zylinderraum 35 und über ein erstes Rückschlagventil 48 mit Gegendruck zum Tank T schaltbar.

Der Systemdruck-Zylinderraum 24 ist über eine Leitung 46 und über ein zweites, entsperrbares Rückschlagventil 49 mittels eines zweiten Mehrwegeventils 50 (4/3-Wegeventil) wechselweise mit der Druckmittelquelle P (Schließdruckaufbau) oder mit dem Tank T (Öffnen) verbindbar, wobei in einer dritten Schaltstellung (Schließen im Eilgang) das Rückschlagventil 49 den Durchfluß zum Tank T sperrt.

Der Verriegelungskolben 7 weist eine schließseitige, ringförmige Kolbenfläche 51 auf, die der Kolbenfläche 38 entspricht.

Die Summe der Kolbenfläche 39 und 20 ist größer als die Summe der Kolbenflächen 38 und 51. Im weiteren ist die Summe der Kolbenflächen 38 und 51 größer als die Kolbenfläche 39.

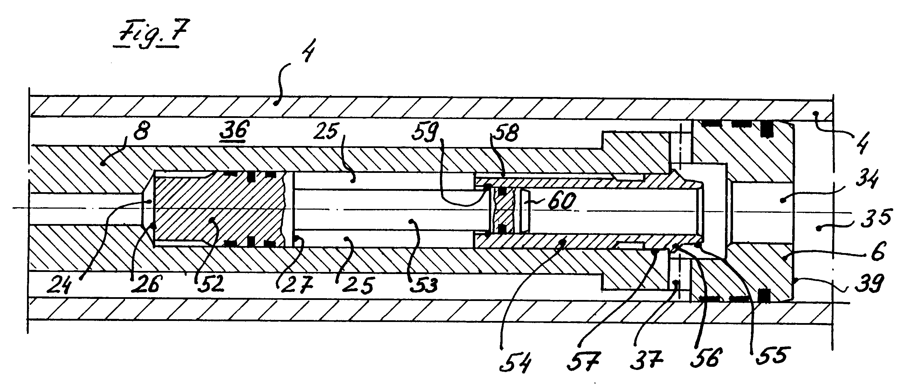

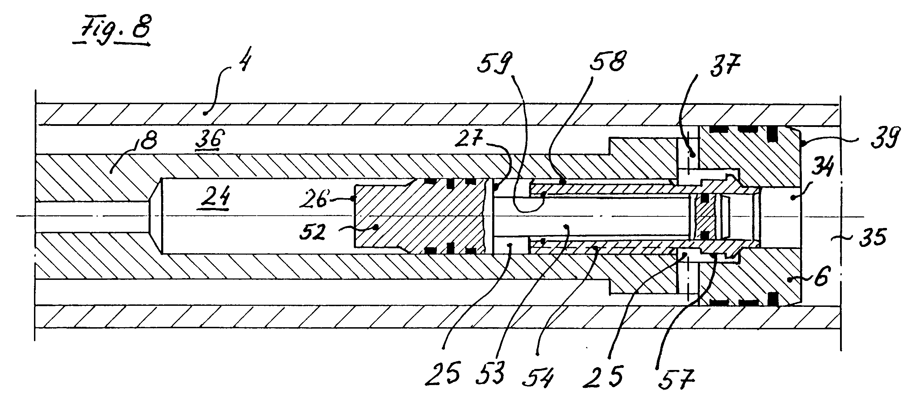

Die Fig. 7 und 8 zeigen eine andere Ausführungsform einer in der Kolbenstange 8 angeordneten Druckübersetzungsvorrichtung, die aus einem in einem Druckübersetzerzylinder geführten Druckübersetzerkolben 52 besteht, der dem Druckübersetzerkolben 23 nach den Fig. 1 bis 6 im wesentlichen entspricht, an dessen Führungsstange 53 jedoch ein anders gestalteter Ventilkörper 54 längsverschieblich geführt ist, der die Anordnung einer Druckfeder zwischen Druckübersetzerkolben und Ventilkörper erübrigt.

Der Ventilkörper 54 weist an seinem vorderen Ende eine Dichtfläche 55 und einen Anschlagring 56 auf, an den sich ein Zylinderstück 57 anschließt. Im weiteren hat die Außenfläche des Ventilkörpers 54 mindestens eine Durchgangsnut 58 ausgebildet.An seiner Innenfläche weist der hülsenförmige Ventilkörper 54 einen inneren Anschlagring 59 auf, der mit einem am freien Ende der Führungsstange 53 angeordneten Anschlag 60 zur Anlage bringbar ist.

Die einzelnen Betriebsphasen der erfindungsgemäßen Formschließvorrichtung werden nachfolgend unter Bezugnahme auf die Fig. 1 bis 3, bzw. 5 bis 8 beschrieben.

### 1. Schließen der Formwerkzeuge im Eilgang (Fig. 1, 5 und 7)

Das Schließen der Formwerkzeughälften 2 und 10 erfolgt durch die Beaufschlagung des schließseitigen Eilgang-Zylinderraumes 16 mit Druckmedium unter einem Druck von z.B. 200 bar das von der Druckmittelquelle P über das erste, in der Schaltstellung nach Fig. 1 geschaltete Mehrwegeventil 47 und die Leitung 21 eingeleitet wird. In dieser Schaltstellung des ersten Mehrwegeventils 47 sind der öffnungseitige Eilgang-Zylinderraum 17 über die Leitung 22 und der öffnungseitige Zylinderraum 35 übe die Leitung 40 über ein erstes Rückschlagventil 48 mit dem Tank T verbunden, wobei im Rückschlagventil 48 ein Gegendruck von z.B. 6 bar zu überwinden ist.

Das zweite Mehrwegeventil 50 ist dabei (entsprechend der Darstellung nach Fig. 1) so geschaltet, daß die Verbindung über die Leitung 46 zum Tank T durch das zweite Rückschlagventil 49 gesperrt ist. Der Druckübersetzerkolben 23 verharrt dadurch in einer Stellung, in der sich der Ventilkörper 29 gemäß den Fig. 1 und 5 wie auch der Ventilkörper 54 in der Ausführungsform nach Fig. 7 in zurückgezogener Position befinden in der eine freie Verbindung vom öffnungsseitigen Zylinderraum 35 über die Durchgangsöffnung 34, den überdruck-Zylinderraum 25 und die Öffnungen 37 zum schließseitigen Zylinderraum 36 besteht.

Durch die Druckmittelbeaufschlagung des schließseitigen Eilgang-Zylinderraumes 16 werden die Verriegelungskolben 6 und 7 in Schließrichtung bewegt, wobei das Druckmedium aus dem öffnungsseitigen Eilgang-Zylinderraum 17 und dem öffnungsseitigen Zylinderraum 35, die beide durch die Leitungen 40 und 22 miteinander verbunden sind, über die Durchgangsöffnung 34, den Überdruck-Zylinderraum 25 und die Öffnungen 37 in den schließseitigen Zylinderraum 36 des Verriegelungszylinders 4 und über den Kanal 44 in den schließseitigen Zylinderraum 43 des Verriegelungszylinders 5 umgewälzt wird. Aufgrund der Tatsache, daß die Summe der Kolbenflächen 20 und 39 größer ist als die Summe der Kolbenflächen 38 und 51 entsteht am Ende des Eilgang-Kolbenhubes (Kolbenfläche 19) eine Überschußmenge an Druckmittel, die durch die Endbewegung des Eilgangkolbens über das einen Gegendruck (6 bar) haltende erste Rückschlagventil 48 in den Tank T gepreßt wird.

### 2. Schließdruckaufbau (Fig. 2, 6 und 8)

Nach dem Schließen der Formwerkzeughälften 2 und 10 im Eilgangvorschub wird das zweite Mehrwegventil 50 in die Schaltstellung nach Fig. 2 geschaltet, in der der Systemdruck-Zylinderraum 24 über die Leitung 46 und das Rückschlagventil 49 mit Druckmedium unter Systemdruck (z.B. 200 bar) von der Druckmittelquelle P beaufschlagt wird. Als Folge hiervon wird der Druckübersetzerkolben 23 in Richtung des Verriegelungskolbens 6 verschoben und drückt den Ventilkörper 29 mit Hilfe der Druckfeder 30 gegen die Durchgangsöffnung 34, die somit durch abdichtende Auflage der Dichtungsfläche 33 und durch die in die Durchgangsöffnung 34 ragende Führungsstange 28 verschlossen wird.

Nach dem Verschluß der Durchgangsöffnung 34 durch den Ventilkörper 29 und die Führungsstange 28 wird der Druckübersetzerkolben 23 weiter in Richtung des Verriegelugskolbens 6 bewegt, worauf sich aufgrund des Flächenverhältnisses von Systemdruck-Kolbenfläche 26 und Überdruck-Kolbenfläche 27 im Überdruck Zylinderraum 25 ein überhöhter, den Schließdruck darstellender Druck ausgebildet, der sich über die Durchgangsnut 32 und die Öffnungen 37 in den schließseitigen Zylinderraum 36 des Verriegelungskolbens 6 und über den Kanal 44 in den schließseitigen Zylinderraum 43 des Verriegelungskolbens 7 fortpflanzt.

Bei der Ausführungsform nach den Fig. 7 und 8 wird bei Beaufschlagung des Systemdruck-Zylinderraumes 24 der Druckübersetzerkolben 52 in Richtung des Verrieglungskolbens 6 verschoben und drückt den Ventilkörper 54 aufgrund des zwischen Druckübersetzerkolben 52 und Ventilkörper 54 eingeschlossenen Ölpolsters mit seiner Dichtfläche 55 in Richtung der Durchgangsöffnung 34. Dieses Ölpolster bleibt aufgrund der Längenbemessung des Zylinderstücks 57 solange erhalten, bis die Dichtfläche 55 die Durchgangsöffnung 34 zu verschließen beginnt. Durch das Verschließen der Durchgangsöffnung 34 bildet sich gegenüber dem öffnungsseitigen Zylinderraum 35 im Überdruck-Zylinderraum 25 ein höherer Druck aus, der auf die ringförmige Querschnittsfläche des hülsenförmigen Ventilkörpers 54 wirkt und diesen dadurch in seine entgültige Dichtungsstellung gemäß Fig. 8 drückt.

Nach dem vollständigen Verschließen der Durchgangsöffnung 34 durch den Ventilkörper 54 und die Führungsstange 53 wird der Druckübersetzerkolben 52 weiter in Richtung des Verriegelungskolbens 6 bewegt, worauf sich aufgrund des Flächenverhältnisses von Systemdruck-Kolbenfläche 26 und Überdruck-Kolbenfläche 27 im Überdruck-Zylinderraum 25 ein überhöhter, den Schließdruck darstellender Druck ausbildet, der sich über die Durchgangsnut 58 im Ventilkörper 54 und die Öffnungen 37 in den schließseitigen Zylinderraum 36 des Verriegelungskolbens 6 und über den Kanal 44 in den schließseitigen Zylinderraum 43 des Verriegelungskolbens 7 fortpflanzt.

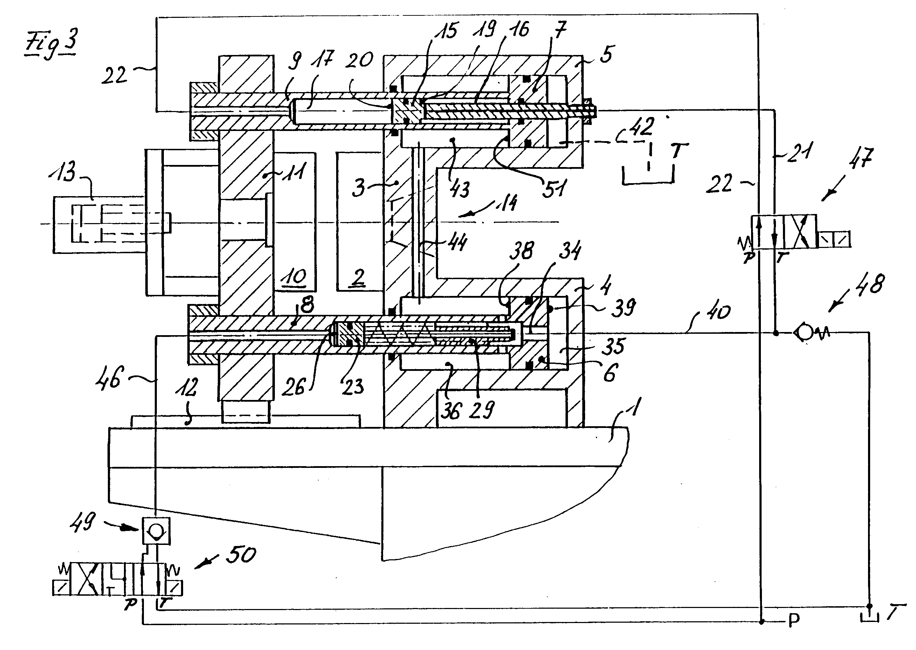

### 3. Öffnen der Formwerkzeuge (Fig. 3)

Zum Öffnen der Formwerkzeughälften 2 und 10 werden das erste und das zweite Merhrwegventil 47 und 50 in die Schaltstellungen nach Fig. 3 geschaltet. In der Schaltstellung des zweiten Mehrwegeventils 50 wird das zweite Rückschlagventil 49 durch Druckbeaufschlagung durch die Pumpe P entsperrt, so daß das Hydrauliköl aus dem Systemdruck-Zylinderraum 24 ohne Gegendruck zum Tank T abfließen kann. In der Schaltstellung des ersten Mehrwegeventils 47 wird der öffnungsseitige Eilgang-Zylinderraum 17 über die Leitung 45 mit Hydrauliköl unter Systemdruck (200 bar) von der Pumpe P beaufschlagt, worauf das Hydrauliköl aus dem schließseitigen Eilgang-Zylinderraum 16 über die Leitung 21 zum ersten Rückschlagventil 48 gedrückt wird und diese nach Überwindung des Gegendrucks (6 bar) zum Tank T passiert. Durch den Gegendruck-Rückstau am ersten Rückschlagventil 48 erfolgt über die Leitung 40, den öffnungsseitigen Zylinderraum 35 und die Durchgangsöffnung 34 eine Druckbeaufschlagung des Ventilkörpers 29 und der Führungsstange 28 worauf beide Elemente zusammen mit dem Druckübersetzerkolben 23 in die dem Verriegelungskolben 6 entgegengesetzte Richtung verschoben werden. Aufgrund der Tatsache, daß das Hydrauliköl aus dem Systemdruck-Zylinderraum 24 über die Leitung 46 und das entsperrte Rückschlagventil 49 ohne nennenswerten Gegendruck frei zum Tank T abfließen kann, erfolgt die Verschiebung des Druckübersetzerkolbens im wesentlichen widerstandsfrei.

Infolge der Verschiebung des Ventilkörpers 29 wird zunächst ein freier Durchgang vom öffnugsseitigen Zylinderraum 35 über die Durchgangsöffnung 34, den Überdruck-Zylinderraum 25 und die Öffnungen 37 zum schließseitigen Zylinderraum 36 und von diesem über den Kanal 44 zum schließseitigen Zylinderraum 43 hergestellt. Nach der ersten, den freien Durchgang schaffenden Verschiebungsphase gelangt unter Druck stehendes Hydrauliköl über die im Ventilkörper 29 ausgebildete Durchgangsnut 32 an die Überdruck-Kolbenfläche 27 des Druckübersetzerkolbens 23 und verschiebt diesen weiter zusammen mit dem Ventilkörper 29 und der Führungsstange 28 bis in die in Fig. 3 und 5 dargestellte Endstellung.

Bei der Ausführungsform nach Fig. 7 und 8 wird zunächst die Stirnfläche der in Position nach Fig. 8 befindlichen Führungsstange 53 mit unter Druck stehendem Hydrauliköl beaufschlagt, worauf sich die Führungsstange 53 in die dem Verrieglungskolben 6 entgegengesetzte Richtung bewegt, bis der Anschlag 60 an der Stirnfläche der Führungsstange 53 an einem inneren Anschlagring 59 im Ventilkörper 54 zur Auflage kommt und diesen mitnimmt und aus seiner die Durchgangsöffnung 34 verschließenden Position (Fig. 8) löst und einen freien Durchgang vom öffnungsseitigen Zylinderraum 35 über die Durchgangsöffnung 34, den Überdruck-Zylinderraum 25 und die Öffnungen 37 zum schleißseitigen Zylinderraum 36 schafft. Die Öffnungsbewegung des Ventilkörpers 54 wird begrenzt durch die Auflage des Anschlagrings 56 an der im Überdruckzylinder ausgebildeten Auflagefläche (Fig. 8).

## Patentansprüche

1. Formschließvorrichtung für eine Spritzgießmaschine mit einer auf einem Grundgestell (1) befestigten, eine Werkzeughälfte (2) tragenden festen Formaufspannplatte (3), an der Verriegelungszylinder (4,5) mit Verriegelungskolben (6,7) angeordnet sind, deren Kolbenstangen (8,9) die feste Formaufspannplatte durchsetzen und in einer beweglichen, auf dem Grundgestell verschiebbar abgestützten und die andere Werkzeughälfte (10) tragenden Formaufspannplatte (11) befestigt sind, mit mindestens einer, zwischen der festen und der beweglichen Formaufspannplatte angeordneten, aus Eilgangkolben und Eilgangzylinder bestehenden Eilgangvorrichtung und mit Hydraulikeinrichtungen zum Beaufschlagen der Verriegelungs- und Eilgangzylinder mit Druckmedium, **dadurch gekennzeichnet,** daß,
- zwei Arten von Verriegelungskolben (6,7) mit je einer schließseitigen, ringförmigen Kolbenfläche (38,51) vorgesehen sind, von denen mindestens ein Verriegelungskolben (7) der einen Art eine Eilgangvorrichtung und mindestens ein Verriegelungskolben (6) der anderen Art eine Druckübersetzervorrichtung und eine öffnungsseitige Kolbenfläche (39) aufweisen, wobei
- die Eilgangvorrichtung aus einem in der Kolbenstange (9) des Verriegelungskolbens (7) angeordneten Eilgangkolben (15) besteht, dessen Eilgangkolbenstange (18) den Verriegelungskolben (7) durchsetzt und im Verriegelungszylinder (5) befestigt ist, der den Eilgangzylinder in einen schließseitigen Eilgangzylinderraum (16) und in einen öffnungsseitigen Eilgangzylinderraum (17) unterteilt, und der eine öffnungsseitige Eilgangskolbenfläche (20) und eine schließseitige, ringförmige Eilgangkolbenfläche (19) aufweist,
- die Druckübersetzereinrichtung aus einem in der Kolbenstange (8) des Verriegelungskolbens (6) angeordneten Druckübersetzerkolben (23,52) besteht, der frei verschiebbar in einem Druckübersetzerzylinder angeordnet ist und diesen in einen Systemdruckzylinderraum (24) und in einen Überdruckzylinderraum (25) unterteilt, und der eine, dem Verriegelungskolben (6) abgewandte und den Systemdruckzylinderraum (24) begrenzende, größere Systemdruck-Kolbenfläche (26) sowie eine den Überdruckzylinderraum (25) begrenzende, ringförmige kleinere Überdruckkolbenfläche (27) aufweist, die eine Führungsstange (28,53) für einen auf dieser längsverschieblich angeordneten Ventilkörper (29,54) angeordnet hat, mit dem eine im Verriegelungskolben (6) angeordnete Durchgangsöffnung (34) verschließbar ist, die auf der einen Seite in den öffnungsseitigen Zylinderraum (35) des Verriegelungskolbens (6) mündet und auf der anderen Seite mit dem Überdruckzylinderraum (25) und über eine Öffnung (37) mit dem schließseitigen Zylinderraum (36) des Verriegelungszylinders (6) in Verbindung steht, wobei in der die Durchgangsöffnung (34) verschließenden Position des Ventilkörpers (29,54) ein freier Durchgang von dem von der Überdruckkolbenfläche (27) begrenzten Überdruckzylinderraum (25) über Durchgangsnuten (32,58) und die Öffnung (37) zum schließseitigen Zylinderraum (36) besteht,
- der schließseitige Zylinderraum (36) des den Verriegelungskolben (6) beinhaltenden Verriegelungszylinders (4) mit dem schließseitigen Zylinderraum (43) des den Verriegelungskolben (7) beinhaltenden Verriegelungszylinders (5) über einen Kanal (44) verbunden ist,
- der schließseitige, ringförmige Eilgangzylinderraum (16) mittels eines ersten Mehrwegeventils (47) wahlweise an eine Druckmittelquelle (P) anschließbar oder mit dem öffnungsseitigen Zylinderraum (35) des Verriegelungszylinders (4) und über ein erstes Rückschlagventil (48) mit dem Tank (T) verbindbar ist, wobei das erste Rückschlagventil (48) in Richtung des Tanks (T) nach Überwindung eines Gegendrucks zum Tank (T) öffnet und in umgekehrter Richtung sperrt,
- der öffnungsseitige Eilgangzylinderraum (17) mittels des ersten Mehrwegeventils (47) wahlweise an die Druckmittelquelle (P) anschließbar oder mit dem öffnungsseitigen Zylinderraum (35) des Verriegelungszylinders (4) und über das erste Rückschlagventil (48) mit dem Tank (T) verbindbar ist, und
- der Systemdruck-Zylinderraum (24) mittels eines zweiten Mehrwegeventils (50) über ein zweites Rückschlagventil (49) wahlweise an die Druckmittelquelle (P) anschließbar oder mit dem Tank (T) verbindbar ist, wobei das Rückschlagventil (49) in Richtung der Druckmittelquelle (P) bzw. des Tanks (T) sperrt und durch Druckmittelbeaufschlagung durch die Druckmittelquelle (P) (Schaltstellung gemäß Fig. 3) entsperrbar ist.

2. Formschließvorrichtung nach Anspruch 1, **dadurch gekennzeichnet**, daß in der festen Formaufspannplatte (3) vier Verriegelungszylinder (4,5) angeordnet sind, in denen jeweils diagonal gegenüberliegend zwei Verriegelungskolben (7) mit Eilgangvorrichtungen in den Kolbenstangen (9) und zwei Verriegelungskolben (6) mit Druckübersetzereinrichtungen in den Kolbenstangen (8) angeordnet sind, wobei sämtliche schließseitigen Zylinderräume (36,43) durch Kanäle (44) miteinander verbunden sind.

3. Formschließvorrichtung nach Anspruch 1 oder 2, **dadurch gekennzeichnet,** daß die Summe aus der öffnunsseitigen Kolbenfläche (39) des Verriegelungskolbens (6) und der öffnungsseitigen Kolbenfläche (20) des Eilgangkolbens (15) größer ist, als die Summe aus den schließseitigen ringförmigen Kobenflächen (38 und 51) der Verriegelungskolben (6 und 7).

4. Formschließvorrichtung nach einem der Ansprüche 1 bis 3, **dadurch gekennzeichnet,** daß die Summe aus den schließseitigen, ringförmigen Kolbenflächen (38 und 51) der Verriegelungskolben (6 und 7) größer ist als die Fläche der öffnungsseitigen Kolbenfläche (39) des Verriegelungskolbens (6).

5. Formschließvorrichtung nach einem der Ansprüche 1 bis 4, **dadurch gekennzeichnet,** daß zwischen der kleineren Überdruck-Kolbenfläche (27) des Druckübersetzerkolbens (23) und dem Ventilkörper (29) eine Druckfeder (30) angeordnet ist, mit der der Ventilkörper (29) im drucklosen Zustand der Druckübersetzereinrichtung gegen einen Anschlag (31) am Ende der Führungsstange (28) gedrückt ist.

6. Formschließvorrichtung nach einem der Ansprüche 1 bis 4, **dadurch gekennzeichnet,** daß der auf der Führungsstange (53) des Druckübersetzerkolbens (52) längsverschieblich angeordnete Ventilkörper (54), ausgehend von seinem vorderen, dem Druckübersetzerkolben (52) abgewandten Ende eine Dichtfläche (55), einen Anschlagring (56), ein Zylinderstück (57) sowie ein bis zum rückwärtigen Ende des Ventilkörpers (54) reichendes Teil mit mindestens einer Durchgangsnut (58) aufweist, und im inneren, von der Führungsstange (53) durchsetzten Bereich, einen inneren Anschlagring (59) besitzt, der mit einem am freien Ende der Führungstange (53) angeordneten Anschlag (60) zum Anschlag bringbar ist, wobei die axiale Länge des Zylinderstücks (57) so bemessen ist, daß das Zylinderstück (57) beim Vorwärtshub des Ventilkörpers (54) den Durchgang vom Überdruckzylinderraum (25) über die Durchgangsnut (58) und die Öffnungen (37) zum schließseitigen Zylinderraum (36) erst freigibt, wenn die Dichtungsfläche (55) bereits beginnt, die Durchgangsöffnung (34) zu verschließen.

7. Verfahren zum Betrieb der Formschließvorrichtung nach einem der Ansprüche 1 bis 6, **dadurch gekennzeichnet,** daß
- beim Schließen (Fig. 1) der Werkzeughälften (2,10) im Eilgang das erste Mehrwegventil (47) so geschaltet ist, daß der schließseitige Eilgang-Zylinderraum (16) an die Druckmittelquelle (P), der öffnungsseitige Eilgang-Zylinderraum (17) zusammen mit dem öffnungsseitigen Zylinderraum (35) unter Zwischenschaltung des ersten Rückschlagventils (48) an den Tank (T) angeschlossen sind, und das zweite Mehrwegventil (50) so geschaltet ist, daß der Systemdruck-Zylinderraum (24) über das zweite, in Sperrstellung befindliche Rückschlagventil (49) zum Tank (T) geschaltet ist,
- beim Schließdruckaufbau (Fig. 2) das erste Mehrwegventil (47) so geschaltet ist, daß der schließseitige Eilgang-Zylinderraum (16) an die Druckmittelquelle (P) und der öffnungsseitige Eilgang-Zylinderraum (17) zusammen mit dem öffnungsseitigen Zylinderraum (35) unter Zwischenschaltung des ersten Rückschlagventils (48) an den Tank (T) angeschlossen sind, und das zweite Mehrwegventil (50) so geschaltet ist, daß der Systemdruck-Zylinderraum (24) an die Druckmittelquelle (P) angeschlossen ist, wodurch der Druckübersetzerkolben (23,52) zusammen mit der Führungsstange (28,53) in Richtung des Verriegelungskolbens (6) verschoben wird, worauf der Ventilkörper (29,54) zunächst die Durchgangsgangsöffnung (34) im Verriegelungskolben (6) verschließt und im weiteren im Überdruckzylinderraum (25) ein erhöhter Schließdruck aufgebaut wird, der sich von dem von der Überdruckkolbenfläche (27) begrenzten Überdruck-Zylinderraum (25) über die Durchgangsnut (32,58) im Ventilkörper (29,54) und die Öffnung (37) in der Kolbenstange (8) in den schließseitigen Zylinderraum (36) und über den Kanal (44) in den schließseitigen Zylinderraum (43) fortpflanzt, und
- beim Öffnen (Fig. 3) der Werkzeughälften (2,10) das erste Mehrwegventil (47) so geschaltet ist, daß der schließseitige Eilgang-Zylinderraum (16) zusammen mit dem öffnungsseitigen Zylinderraum (35) unter Zwischenschaltung des ersten Rückschlagventils (48) an den Tank (T) angeschlossen ist und der öffnungsseitige Eilgang-Zylinderraum (17) an die Druckmittelquelle (P) angeschlossen ist, und daß das zweite Mehrwegventil (50) so geschaltet ist, daß der Systemdruck-Zylinderraum (24) über das zweite Rückschlagventil (49) mit dem Tank (T) frei in Verbindung steht, wobei das zweite Rückschlagventil (49) durch Druckmittelbeaufschlagung durch die Druckmittelquelle (P) entsperrt ist.

## Claims

1. Mould-closing device for an injection moulding machine with a stationary mould-clamping plate (3) fastened to a base (1) and carrying one tool half (2), on which mould-clamping plate (3) locking cylinders (4, 5) with locking pistons (6, 7) are located, whereof the piston rods (8, 9) penetrate the stationary mould-clamping plate and are fastened in a movable mould-clamping plate (11) displaceably supported on the base and carrying the other tool half (10), with at least one rapid traverse device located between the stationary and the movable mould-clamping plate and consisting of a rapid traverse piston and rapid traverse cylinder and with hydraulic devices for acting on the locking cylinders and rapid traverse cylinders with pressure medium, characterised in that,
- two types of locking pistons (6, 7) are provided with respectively one annular piston surface (38, 51) on the closing side, whereof at least one locking piston (7) of one type comprises a rapid traverse device and at least one locking piston (6) of the other type comprises a pressure-transmitting device and a piston surface (39) on the opening side, in which case
- the rapid traverse device consists of a rapid traverse piston (15) located in the piston rod (9) of the locking piston (7), whereof the rapid traverse piston rod (18) penetrates the locking piston (7) and is fastened in the locking cylinder (5), which divides the rapid traverse cylinder into a rapid traverse cylinder chamber (16) on the closing side and a rapid traverse cylinder chamber (17) on the opening side, and which comprises a rapid traverse piston surface (20) on the opening side and an annular rapid traverse piston surface (19) on the closing side,
- the pressure-transmitting device consists of a pressure-transmitting piston (23, 52) located in the piston rod (8) of the locking piston (6), which pressure-transmitting piston (23, 52) is arranged to move freely in a pressure-transmitting cylinder and divides the latter into a system pressure cylinder chamber (24) and into an excess pressure cylinder chamber (25), and which comprises a larger system pressure piston surface (26) remote from the locking piston (6) and defining the system pressure cylinder chamber (24) as well as an annular, smaller excess pressure piston surface (27) defining the excess pressure cylinder chamber (25), which piston surface (27) has a guide rod (28, 53) for a valve body (29, 54) arranged to move longitudinally thereon, by which valve body a passage opening (34) located in the locking piston (6) can be closed, which opening (34) opens on one side into the cylinder chamber (35) on the opening side of the locking piston (6) and on the other side is connected to the excess pressure cylinder chamber (25) and by way of an opening (37) to the cylinder chamber (36) on the closing side of the locking cylinder (6), whereby in the position of the valve body (29, 54) closing off the passage opening (34), a free passage exists from the excess pressure cylinder chamber (25) defined by the excess pressure piston surface (27) by way of through grooves (32, 58) and the opening (37) to the cylinder chamber (36) on the closing side,
- the cylinder chamber (36) on the closing side of the locking cylinder (4) containing the locking piston (6) is connected to the cylinder chamber (43) on the closing side of the locking cylinder (5) containing the locking piston (7) by way of a channel (44),
- the annular rapid traverse cylinder chamber (16) on the closing side can be connected by means of a first multi-way valve (47) optionally to a pressure medium source (P) or to the cylinder chamber (35) on the opening side of the locking cylinder (4) and can be connected by way of a first non-return valve (48) to the tank (T), the first non-return valve (48) opening in the direction of the tank (T) after overcoming a counter-pressure to the tank (T) and blocking in the reverse direction,
- the rapid traverse cylinder chamber (17) on the opening side can be connected by means of the first multi-way valve (47) optionally to the pressure medium source (P) or to the cylinder chamber (35) on the opening side of the locking cylinder (4) and can be connected by way of the first non-return valve (48) to the tank (T), and
- the system pressure cylinder chamber (24) can be connected by means of a second multi-way valve (50) by way of a second non-return valve (49) optionally to the pressure medium source (P) or can be connected to the tank (T), the non-return valve (49) blocking in the direction of the pressure medium source (P) or of the tank (T) and can be unblocked by the action of pressure medium by the pressure medium source (P) (switching position according to Figure 3).

2. Mould-closing device according to Claim 1, characterised in that located in the stationary mould-clamping plate (3) are four locking cylinders (4, 5), in which, arranged respectively diagonally opposite each other are two locking pistons (7) with rapid traverse devices in the piston rods (9) and two locking pistons (6) with pressure-transmitting devices in the piston rods (8), all the cylinder chambers (36, 43) on the closing side being connected to each other by channels (44).

3. Mould-closing device according to Claim 1 or 2, characterised in that the sum of the piston surface (39) on the opening side of the locking piston (6) and the piston surface (20) on the opening side of the rapid traverse piston (15) is greater than the sum of the annular piston surfaces (38 and 51) on the closing side of the locking pistons (6 and 7).

4. Mould-closing device according to one of Claims 1 to 3, characterised in that the sum of the annular piston surfaces (38 and 51) on the closing side of the locking pistons (6 and 7) is greater than the surface of the piston surface (39) on the opening side of the locking piston (6).

5. Mould-closing device according to one of Claims 1 to 4, characterised in that located between the smaller excess pressure piston surface (27) of the pressure-transmitting piston (23) and the valve body (29) is a compression spring (30), by which the valve body (29) is pushed in the pressureless state of the pressure-transmitting device against a stop (31) at the end of the guide rod (28).

6. Mould-closing device according to one of Claims 1 to 4, characterised in that starting from its front end remote from the pressure-transmitting piston (52), the valve body (54) arranged to move longitudinally on the guide rod (53) of the pressure-transmitting piston (52) comprises a sealing surface (55), a stop ring (56), a cylindrical portion (57) as well as a part reaching to the rear end of the valve body (54) with at least one through groove (58) and in the inner region penetrated by the guide rod (53), has an inner stop ring (59), which can be brought into abutment with a stop (60) located at the free end of the guide rod (53), the axial length of the cylindrical section (57) having dimensions such that at the time of the forward stroke of the valve body (54), the cylindrical section (57) only releases the passage from the excess pressure cylinder chamber (25) by way of the through groove (58) and the openings (37) to the cylinder chamber (36) on the closing side, when the sealing surface (55) already begins to close the passage opening (34).

7. Method for operating the mould-closing device according to one of Claims 1 to 6, characterised in that
- when closing (Figure 1) the tool halves (2, 10) in rapid traverse, the first multi-way valve (47) is switched so that the rapid traverse cylinder chamber (16) on the closing side is connected to the pressure medium source (P), the rapid traverse cylinder chamber (17) on the opening side together with the cylinder chamber (35) on the opening side is connected to the tank (T) with the interposition of the first non-return valve (48), and the second multi-way valve (50) is switched so that the system pressure cylinder chamber (24) is connected to the tank (T) by way of the second non-return valve (49) located in the blocking position,
- when building up the closing pressure (Figure 2), the first multi-way valve (47) is switched so that the rapid traverse cylinder chamber (16) on the closing side is connected to the pressure medium source (P) and the rapid traverse cylinder chamber (17) on the opening side together with the cylinder chamber (35) on the opening side is connected to the tank (T) with the interposition of the first non-return valve (48), and the second multi-way valve (50) is switched so that the system pressure cylinder chamber (24) is connected to the pressure medium source (P), due to which the pressure-transmitting piston (23, 52) together with the guide rod (28, 53) is displaced in the direction of the locking piston (6), whereupon the valve body (29, 54) first of all closes the passage opening (34) in the locking piston (6) and furthermore in the excess pressure cylinder chamber (25) an increased closing pressure is built up, which is transmitted from the excess pressure cylinder chamber (25) defined by the excess pressure piston surface (27) by way of the through groove (32, 58) in the valve body (29, 54) and the opening (37) in the piston rod (8) into the cylinder chamber (36) on the closing side and by way of the channel (44) into the cylinder chamber (43) on the closing side, and
- at the time of opening (Figure 3) of the tool halves (2, 10), the first multi-way valve (47) is switched so that the rapid traverse cylinder chamber (16) on the closing side together with the cylinder chamber (35) on the opening side is connected to the tank (T) with the interposition of the first non-return valve (48) and the rapid traverse cylinder chamber (17) on the opening side is connected to the pressure medium source (P), and that the second multi-way valve (50) is switched so that the system pressure cylinder chamber (24) is freely connected to the tank (T) by way of the second non-return valve (49), the second non-return valve (49) being unblocked by the actuation of pressure medium by the pressure medium source (P).

## Revendications

1. Dispositif de fermeture de moules pour une machine de moulage par injection, comprenant une plaque fixe (3) d'ablocage de moules qui est assujettie sur un bâti de base (1), porte une moitié (2) d'outil, et sur laquelle sont disposés des vérins de verrouillage (4, 5) munis de pistons de verrouillage (6, 7) dont les tiges (8, 9) traversent la plaque fixe d'ablocage des moules, et sont fixées dans une plaque mobile (11) d'ablocage des moules, montée avec appui coulissant sur le bâti de base, et portant l'autre moitié (10) de l'outil ; au moins un dispositif de marche rapide interposé entre les plaques fixe et mobile d'ablocage des moules, et comprenant des pistons de marche rapide et des vérins de marche rapide ; et des dispositifs hydrauliques pour solliciter les vérins de verrouillage et de marche rapide par un fluide pressurisé, caractérisé par le fait que
- deux types de pistons de verrouillage (6, 7) sont prévus, lesdits pistons présentant une surface annulaire respective (38, 51) située côté fermeture, au moins un piston de verrouillage (7) de l'un des types formant un dispositif de marche rapide, et au moins un piston de verrouillage (6) de l'autre type formant un dispositif démultiplicateur de pression, et comportant une surface (39) située côté ouverture, dispositif dans lequel
- le dispositif de marche rapide est constitué d'un piston (15) de marche rapide qui est logé dans la tige (9) du piston de verrouillage (7), et dont la tige (18) traverse ledit piston de verrouillage (7) et est fixée dans le vérin de verrouillage (5), lequel piston de marche rapide subdivise le vérin de marche rapide en une chambre cylindrique (16) de marche rapide, située côté fermeture, et en une chambre cylindrique (17) de marche rapide, située côté ouverture, et comprend une surface (20) située côté ouverture, et une surface annulaire (19) située côté fermeture,
- le dispositif démultiplicateur de pression est constitué d'un piston (23, 52) démultiplicateur de pression qui est situé dans la tige (8) du piston de verrouillage (6), est logé à coulissement libre dans un vérin de démultiplication de pression, subdivise ce dernier en une chambre cylindrique (24) à pression de système et en une chambre cylindrique (25) à surpression, et comprend une surface (26) de grand dimensionnement, exposée à la pression du système, tournée à l'opposé du piston de verrouillage (6) et délimitant la chambre cylindrique (24) à pression de système, ainsi qu'une surface annulaire (27) d'un plus petit dimensionnement, délimitant la chambre cylindrique (25) à surpression, et sur laquelle se trouve une tige (28, 53) de guidage d'un corps obturateur (29, 54) pouvant coulisser longitudinalement sur cette dernière, et par lequel peut être obturé un orifice de passage (34) qui est pratiqué dans le piston de verrouillage (6), débouche sur l'un des côtés dans la chambre cylindrique (35) située côté ouverture du piston de verrouillage (6) et communique, de l'autre côté, avec la chambre cylindrique (25) à surpression et, par l'intermédiaire d'un orifice (37), avec la chambre cylindrique (36) située côté fermeture du piston de verrouillage (6), auquel cas, lorsque le corps obturateur (29, 54) occupe la position obturant l'orifice de passage (34), une libre circulation est établie, par l'intermédiaire de saignées de passage (32, 58) et de l'orifice (37), depuis la chambre cylindrique (25) à surpression, délimitée par la surface (27) du piston qui est exposée à la surpression, jusqu'à la chambre cylindrique (36) située côté fermeture,
- la chambre cylindrique (36), située côté fermeture du vérin de verrouillage (4) renfermant le piston de verrouillage (6), est reliée, par l'intermédiaire d'un canal (44), à la chambre cylindrique (43) située côté fermeture du vérin de verrouillage (5) renfermant le piston de verrouillage (7),
- la chambre cylindrique annulaire (16) de marche rapide, située côté fermeture, peut être sélectivement raccordée, au moyen d'un premier distributeur (47) à plusieurs voies, à une source (P) de fluide pressurisé, ou bien peut être reliée à la chambre cylindrique (35) située côté ouverture du vérin de verrouillage (4), et au réservoir (T) par l'intermédiaire d'un premier clapet antiretour (48), le premier clapet antiretour (48) s'ouvrant en direction du réservoir (T) après avoir surmonté une contre-pression vers ce réservoir (T), et se bloquant dans la direction inverse,
- la chambre cylindrique (17) de marche rapide, située côté ouverture, peut être sélectivement raccordée, au moyen du premier distributeur (47) à plusieurs voies, à la source (P) de fluide pressurisé, ou bien peut être reliée à la chambre cylindrique (35) située côté ouverture du vérin de verrouillage (4), et au réservoir (T) par l'intermédiaire du premier clapet antiretour (48), et
- la chambre cylindrique (24) à pression de système peut être sélectivement raccordée à la source (P) de fluide pressurisé ou reliée au réservoir (T), au moyen d'un second distributeur (50) à plusieurs voies et par l'intermédiaire d'un second clapet antiretour (49), le clapet antiretour (49) se bloquant dans la direction respective de la source (P) de fluide pressurisé ou du réservoir (T), et pouvant être débloqué par sollicitation par un fluide pressurisé, depuis ladite source (P) de fluide pressurisé (position de commutation selon la figure 3).

2. Dispositif de fermeture de moules, selon la revendication 1, caractérisé par le fait que la plaque fixe (3) d'ablocage de moules renferme quatre vérins de verrouillage (4, 5) dans lesquels sont respectivement agencés, diagonalement à l'opposé, deux pistons de verrouillage (7) logeant des dispositifs de marche rapide dans leurs tiges (9), et deux pistons de verrouillage (6) logeant des dispositifs démultiplicateurs de pression dans leurs tiges (8), toutes les chambres cylindriques (36, 43) situées côté fermeture étant mutuellement reliées par l'intermédiaire de canaux (44).

3. Dispositif de fermeture de moules, selon la revendication 1 ou 2, caractérisé par le fait que la somme de la surface (39) du piston de verrouillage (6), située côté ouverture, et de la surface (20) du piston (15) de marche rapide, située côté ouverture, est plus grande que la somme des surfaces annulaires (38 et 51) des pistons de verrouillage (6 et 7) qui sont situées côté fermeture.

4. Dispositif de fermeture de moules, selon l'une des revendications 1 à 3, caractérisé par le fait que la somme des surfaces annulaires (38 et 51) des pistons de verrouillage (6 et 7), situées côté fermeture, est plus grande que la superficie de la surface (39) du piston de verrouillage (6) qui est située côté ouverture.

5. Dispositif de fermeture de moules, selon l'une des revendications 1 à 4, caractérisé par le fait qu'un ressort de pression (30) est interposé entre le corps obturateur (29) et la surface (27) du piston (23) démultiplicateur de pression, munie d'un plus petit dimensionnement et exposée à la surpression, ressort par lequel, à l'état exempt de pression du dispositif démultiplicateur de pression, le corps obturateur (29) est poussé contre une butée (31) située à l'extrémité de la tige de guidage (28).

6. Dispositif de fermeture de moules, selon l'une des revendications 1 à 4, caractérisé par le fait que le corps obturateur (54), monté à coulissement longitudinal sur la tige (53) de guidage du piston (52) démultiplicateur de pression, présente, à partir de son extrémité antérieure tournée à l'opposé dudit piston (52) démultiplicateur de pression, une surface d'étanchement (55), une bague de butée (56), une pièce cylindrique (57), ainsi qu'une partie s'étendant jusqu'à l'extrémité postérieure du corps obturateur (54), et présentant au moins une saignée de passage (58), ledit corps obturateur possédant, dans la région intérieure traversée par la tige de guidage (53), une bague interne de butée (59) pouvant venir s'appliquer contre une butée (60) implantée à l'extrémité libre de la tige de guidage (53), la longueur axiale de la pièce cylindrique (57) étant dimensionnée de telle sorte que, lors de la course d'avance du corps obturateur (54), ladite pièce cylindrique (57) autorise la circulation depuis la chambre cylindrique (25) à surpression jusqu'à la chambre cylindrique (36) située côté fermeture, par l'intermédiaire de la saignée de passage (58) et des orifices (37), uniquement lorsque la surface d'étanchement (55) commence déjà à obturer l'orifice de passage (34).

7. Procédé d'exploitation du dispositif de fermeture de moules, selon l'une des revendications 1 à 6, caractérisé par le fait que,
- lors de la fermeture (figure 1) des moitiés (2, 10) de l'outil en mode marche rapide, le premier distributeur (47) à plusieurs voies est commuté de façon telle que la chambre cylindrique (16) de marche rapide, située côté fermeture, soit raccordée à la source (P) de fluide pressurisé, et que la chambre cylindrique (17) de marche rapide, située côté ouverture, soit raccordée au réservoir (T) conjointement à la chambre cylindrique (35) située côté ouverture, avec interposition du premier clapet antiretour (48), et le second distributeur (50) à plusieurs voies est commuté de façon telle que la chambre cylindrique (24) à pression de système soit commutée vers le réservoir (T) par l'intermédiaire du second clapet antiretour (49) occupant une position de blocage,
- lors du développement de la pression de fermeture (figure 2), le premier distributeur (47) à plusieurs voies est commuté de façon telle que la chambre cylindrique (16) de marche rapide, située côté fermeture, soit raccordée à la source (P) de fluide pressurisé, et que la chambre cylindrique (17) de marche rapide, située côté ouverture, soit raccordée au réservoir (T) conjointement à la chambre cylindrique (35) située côté ouverture, avec interposition du premier clapet antiretour (48), et le second distributeur (50) à plusieurs voies est commuté de façon telle que la chambre cylindrique (24) à pression de système soit raccordée à la source (P) de fluide pressurisé, si bien que le piston (23, 52) démultiplicateur de pression est déplacé en direction du piston de verrouillage (6), conjointement à la tige de guidage (28, 53), après quoi le corps obturateur (29, 54) obture tout d'abord l'orifice de passage (34) pratiqué dans le piston de verrouillage (6) et il se développe par ailleurs, dans la chambre cylindrique (25) à surpression, une pression de fermeture accrue qui se propage dans la chambre cylindrique (36) située côté fermeture, à partir de la chambre cylindrique (25) à surpression, délimitée par la surface de piston (27) exposée à la surpression, en empruntant la saignée de passage (32, 58) ménagée dans le corps obturateur (29, 54) et l'orifice (37) pratiqué dans la tige de piston (8), et se propage, en empruntant le canal (44), dans la chambre cylindrique (43) située côté fermeture, et
- lors de l'ouverture (figure 3) des moitiés (2, 10) de l'outil, le premier distributeur (47) à plusieurs voies est commuté de façon telle que la chambre cylindrique (16) de marche rapide, située côté fermeture, soit raccordée au réservoir (T) conjointement à la chambre cylindrique (35) située côté ouverture, avec interposition du premier clapet antiretour (48), et que la chambre cylindrique (17) de marche rapide, située côté ouverture, soit raccordée à la source (P) de fluide pressurisé, et le second distributeur (50) à plusieurs voies est commuté de façon telle que la chambre cylindrique (24) à pression de système communique librement avec le réservoir (T), par l'intermédiaire du second clapet antiretour (49), le second clapet antiretour (49) étant débloqué par sollicitation par un fluide pressurisé, à partir de ladite source (P) de fluide pressurisé.
